# EUROPÄISCHE PATENTSCHRIFT

(11) **EP 2 054 134 B1**
(45) Veröffentlichungstag und Bekanntmachung des Hinweises auf die Patenterteilung: **27.03.2013**
(21) Anmeldenummer: 07786524.4
(22) Anmeldetag: 02.08.2007
(51) Int. Cl.: B01D 29/66

(54) **FILTERKERZE FÜR EIN RÜCKSPÜLFILTER**
FILTER CANDLE FOR A BACKWASH FILTER
BOUGIE FILTRANTE POUR FILTRE À LAVAGE À CONTRE COURANT

(30) Priorität: 23.08.2006 DE 102006039508
(43) Veröffentlichungstag der Anmeldung: 06.05.2009
(73) Patentinhaber: Dürr Ecoclean GmbH, 70794 Filderstadt (DE)
(72) Erfinder: KÄSKE, Egon, 52078 Aachen (DE)
(74) Vertreter: Hoeger, Stellrecht & Partner Patentanwälte
(86) Internationale Anmeldenummer: PCT/EP2007/006850
(87) Internationale Veröffentlichungsnummer: WO 2008/022702

(56) Entgegenhaltungen:
- EP-A- 1 685 888
- WO-A-2007/062763
- DE-A1- 10 244 660
- US-A- 3 703 465

## Beschreibung

Die vorliegende Erfindung betrifft eine Filterkerze für ein Rückspülfilter zum Filtrieren eines Fluids, die einen von einem Filtermedium umgebenen Filterkerzeninnenraum umfasst.

Eine solche Filterkerze ist aus der DE 102 44 660 A1 bekannt.

Bei dieser bekannten Filterkerze ist im Filterkerzeninnenraum ein Reinigungskörper angeordnet, der an seiner Oberfläche mit feinen Borsten, Bürsten, flexiblen Lippen oder flexiblen Kratzern versehen ist, deren Länge derart gewählt ist, dass der Gesamtdurchmesser des Reinigungskörpers größer ausfällt als die lichte Weite des Filterkerzeninnenraums. Das Filtermedium ist an der Innenseite der Filterkerze angeordnet und wird während einer Rückspülphase der Filterkerze durch die an dem Reinigungskörper angeordneten Borsten, Bürsten, flexiblen Lippen oder flexiblen Kratzer mechanisch abgereinigt.

Hierbei ist von Nachteil, dass die mechanische Reinigungswirkung des Reinigungskörpers die Filterfläche nicht gleichmäßig erfasst und dass das Filtermedium durch den mechanischen Kontakt mit dem Reinigungskörper abgenutzt wird.

Die DE 102 44 660 A1 offenbart eine Filterkerze gemäß dem Oberbegriff von Anspruch 1.

Der vorliegenden Erfindung liegt die Aufgabe zugrunde, eine Filterkerze der eingangs genannten Art zu schaffen, deren Filtermedium in der Rückspülphase besonders wirksam und gleichmäßig abreinigbar ist.

Diese Aufgabe wird erfindungsgemäß durch eine Filterkerze nach Anspruch 1 gelöst.

Die erfindungsgemäße Filterkerze umfasst einen in dem Filterkerzeninnenraum angeordneten Rückspülstromstaukörper, der beim Rückspülen der Filterkerze durch den Rückspülstrom in einer Längsrichtung der Filterkerze bewegbar ist und eine lokale Erhöhung des Staudrucks des Rückspülstroms erzeugt. Aufgrund der Staudruckerhöhung in der unmittelbaren Nachbarschaft des Rückspülstromstaukörpers wird das Filtermedium in seinem unmittelbar an die jeweilige Position des Rückspülstromstaukörpers angrenzenden Bereich besonders intensiv von dem Rückspülstrom durchströmt, so dass jeweils in dem Bereich, in dem sich der Rückspülstromstaukörper befindet, die Verunreinigungen besonders wirksam von dem Filtermedium abgereinigt werden.

Dabei liegt der Rückspülstromstaukörper beim Rückspülen der Filterkerze nicht an dem abzureinigenden Filtermedium an, so dass kein mechanischer Kontakt zwischen dem Rückspülstromstaukörper und dem Filtermedium besteht, wodurch gewährleistet ist, dass das Filtermedium nicht durch Kontakt mit dem Rückspülstromstaukörper abgenutzt wird. Ferner wird erreicht, dass die Bewegung des Rückspülstromstaukörpers in der Längsrichtung der Filterkerze während des Rückspülvorgangs nicht durch mechanische Reibung oder Haftung an dem Filtermedium gebremst wird. Außerdem wird der Rückspülstromstaukörper nicht durch von dem Filtermedium abgelöste Partikel verschmutzt.

Vorzugsweise bewegt sich der Rückspülstromstaukörper während der Rückspülphase der Filterkerze über die gesamte Längserstreckung der Filterkerze hinweg, so dass an jeder Stelle des Filtermediums ein erhöhter Rückspüldruck zur Verfügung steht, wenn die betreffende Stelle von dem Rückspülstromstaukörper passiert wird.

Dadurch wird vermieden, dass das Filtermedium nur dort intensiv von dem Rückspülstrom durchströmt wird, wo der Durchströmungswiderstand niedrig ist. Bei der erfindungsgemäßen Filterkerze wird somit insbesondere in den auslassnahen Bereichen des Filtermediums die Abreinigungswirkung während der Rückspülphase deutlich verstärkt.

Bei der erfindungsgemäßen Filterkerze wird der fluidische Rückspüleffekt verstärkt, ohne dass eine mechanische Abreinigung des Filtermediums durch einen mit dem Filtermedium in Kontakt kommenden Reinigungskörper erfolgt. Die Abreinigung des Filtermediums erfolgt bei der erfindungsgemäßen Filterkerze daher besonders wirksam, gleichmäßig und schonend.

Durch die verbesserte Rückspülung des Filtermediums und den Wegfall einer mechanischen Abnutzung desselben beim Rückspülen wird die Standzeit der Filterkerze deutlich verlängert.

Bei einer bevorzugten Ausgestaltung der Erfindung ist vorgesehen, dass die Ausdehnung des Rückspülstromstaukörpers quer zu der Längsrichtung der Filterkerze kleiner ist als die lichte Weite des Filterkerzeninnenraums quer zu der Längsrichtung der Filterkerze. Dadurch wird erreicht, dass der Rückspülstromstaukörper sich im wesentlichen ungehindert durch den Filterkerzeninnenraum bewegen kann.

Andererseits darf die Ausdehnung des Rückspülstromstaukörpers relativ zu der lichten Weite des Filterkerzeninnenraums nicht zu klein sein, um eine ausreichende Erhöhung des Rückspülstromstaudrucks zu erzielen. Vorteilhafterweise beträgt daher die Ausdehnung des Rückspülstromstaukörpers quer zu der Längsrichtung der Filterkerze mindestens ungefähr 80 %, vorzugsweise mindestens ungefähr 90 %, der lichten Weite des Filterkerzeninnenraums.

Als besonders günstig hat es sich erwiesen, wenn die Breite eines Spaltes zwischen dem Rückspülstromstaukörper einerseits und einer Begrenzungswand des Filterkerzeninnenraums andererseits höchstens ungefähr 3 mm, vorzugsweise höchstens ungefähr 2 mm, beträgt.

Grundsätzlich kann der Rückspülstromstaukörper eine beliebige Form aufweisen.

Insbesondere dann, wenn eine im wesentlichen zylindrische Filterkerze verwendet wird, ist es günstig, wenn der Rückspülstromstaukörper im wesentlichen kugelförmig oder im wesentlichen zylindrisch ausgebildet ist, weil diese Formen besonders gut an den Querschnitt des Filterkerzeninnenraums angepasst sind.

Um die Bewegung des Rückspülstromstaukörpers durch den Filterkerzeninnenraum nicht zu behindern, ist es günstig, wenn der Rückspülstromstaukörper eine vorsprungfreie Oberfläche aufweist, die insbesondere frei von Borsten, Bürsten, flexiblen Lippen, flexiblen Kratzern oder anderen Vorsprüngen ist.

Eine besonders reibungsfreie Bewegung des Rückspülstromstaukörpers durch den Filterkerzeninnenraum wird erzielt, wenn der Rückspülstromstaukörper beim Rückspülen der Filterkerze nicht an einer Begrenzungswand des Filterkerzeninnenraums anliegt.

Bei einer bevorzugten Ausgestaltung der Erfindung ist vorgesehen, dass der Rückspülstromstaukörper während der Filtrationsphase des Rückspülfilters an einem oberen Ende der Filterkerze angeordnet ist und dann während der Rückspülphase von diesem oberen Ende in der Längsrichtung der Filterkerze nach unten bewegt wird.

Um zu erreichen, dass der Rückspülstromstaukörper nach dem Ende der Rückspülphase von selbst in die Ausgangsposition am oberen Ende der Filterkerze zurückkehrt, kann vorgesehen sein, dass der Rückspülstromstaukörper eine kleinere mittlere Dichte aufweist als das filtrierte Fluid. Auf diese Weise ist die auf den Rückspülstromstaukörper einwirkende Auftriebskraft innerhalb des filtrierten Fluids größer als die auf den Rückspülstromstaukörper wirkende Gewichtskraft.

Um dies zu erreichen, kann der Rückspülstromstaukörper beispielsweise als ein Hohlkörper ausgebildet sein.

Alternativ oder ergänzend hierzu kann auch vorgesehen sein, dass der Rückspülstromstaukörper ein Material umfasst, das eine geringere Dichte aufweist als das filtrierte Fluid.

Insbesondere kann vorgesehen sein, dass der Rückspülstromstaukörper vollständig aus einem Material besteht, das eine geringere Dichte aufweist als das filtrierte Fluid.

Bei einer bevorzugten Ausgestaltung der Erfindung ist die Filterkerze im wesentlichen zylindrisch ausgebildet.

Ferner ist es günstig, wenn die Filterkerze einen Anschlag für den Rückspülstromstaukörper aufweist, an welchem der Rückspülstromstaukörper während der Filtrationsphase der Filterkerze anliegt. Auf diese Weise ist die Position des Rückspülstromstaukörpers während der Filtrationsphase der Filterkerze wohldefiniert.

Bei der Erfindung ist vorgesehen, dass die Filterkerze eine Rückspülstromstaukörperaufnahme für den Rückspülstromstaukörper aufweist, in welcher der Rückspülstromstaukörper während der Filtrationsphase der Filterkerze aufgenommen ist, wobei die Rückspülstromstaukörperaufnahme mindestens einen Fluidkanal zum Vorbeileiten des filtrierten Fluids an dem Rückspülstromstaukörper umfasst. Auf diese Weise kann das filtrierte Fluid während der Filtrationsphase ungehindert an dem Rückspülstromstaukörper vorbei fließen, so dass der Strömungswiderstand der Filterkerze durch das Vorhandensein des Rückspülstromstaukörpers nicht erhöht wird.

Um die Position des Rückspülstromstaukörpers innerhalb der Rückspülstromstaukörperaufnahme in radialer Richtung festzulegen, ist ferner vorgesehen, dass die Rückspülstromstaukörperaufnahme mindestens einen in den Innenraum der Rückspülstromstaukörperaufnahme hinein weisenden Vorsprung aufweist.

Zur Erhöhung der mechanischen Stabilität umfasst die Filterkerze vorzugsweise einen Stützkörper, welcher das Filtermedium abstützt.

Bei einer bevorzugten Ausgestaltung der Erfindung ist vorgesehen, dass das Filtermedium an der dem Filterkerzeninnenraum abgewandten Außenseite des Stützkörpers angeordnet ist. Dadurch wird in einfacher Weise verhindert, dass der Rückspülstromstaukörper beim Rückspülen der Filterkerze an dem Filtermedium anliegt.

Ferner ist vorzugsweise vorgesehen, dass die Filterkerze in der Filtrationsphase von außen nach innen durchströmbar ist.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: einen schematischen vertikalen Längsschnitt durch eine Filterkerze mit einem Rückspülstromstaukörper, wobei sich die Filterkerze in der Filtrationsphase befindet;
- Fig. 2: einen schematischen horizontalen Querschnitt durch eine Rückspülstromstaukörperaufnahme der Filterkerze aus Fig. 1 in der Filtrationsphase, längs der Linie 2-2 in Fig. 1;
- Fig. 3: einen schematischen vertikalen Längsschnitt durch die Filterkerze aus Fig. 1 während einer Rückspülphase; und
- Fig. 4: einen schematischen horizontalen Querschnitt durch die Filterkerze aus Fig. 3 während der Rückspülphase, längs der Linie 4-4 in Fig. 3.

Gleiche oder funktional äquivalente Elemente sind in allen Figuren mit denselben Bezugszeichen bezeichnet.

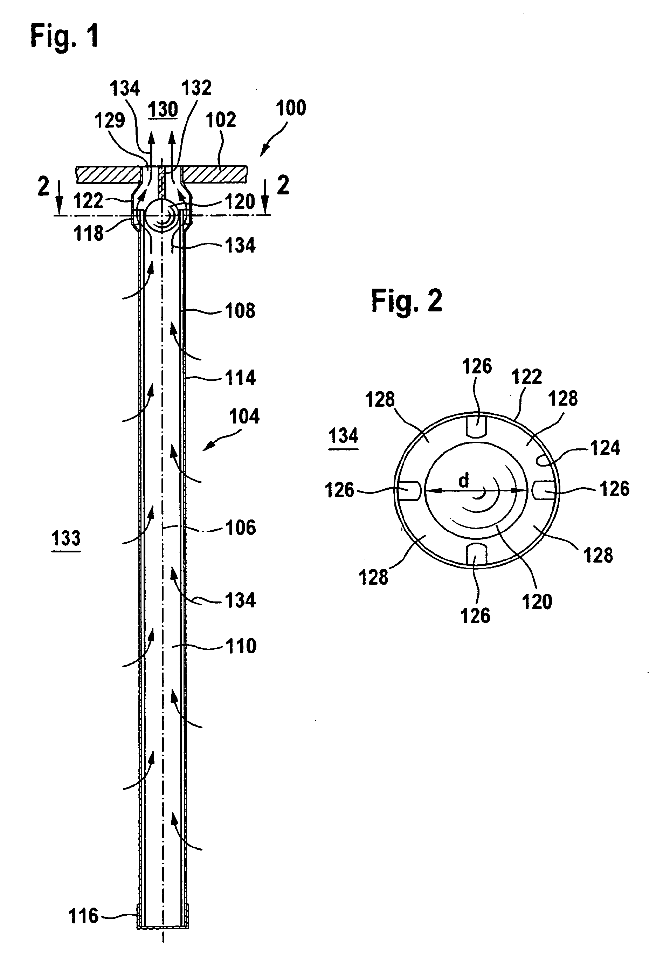

Ein in den Fig. 1 bis 4 dargestelltes, als Ganzes mit 100 bezeichnetes Rückspülfilter umfasst mindestens eine an einer Halterung 102 gehaltene, im wesentlichen zylindrische Filterkerze 104 mit einer im wesentlichen vertikal ausgerichteten Längsmittelachse 106.

Die Filterkerze 104 umfasst einen zylindrischen Stützkörper 108, der einen im wesentlichen zylindrischen Filterkerzeninnenraum 110 umschließt und in den Filterkerzeninnenraum 110 vorstehende, sich parallel zur Längsmittelachse 106 der Filterkerze 104 erstreckende und in Umfangsrichtung der Filterkerze 104 im wesentlichen äquidistant voneinander beabstandete Verstärkungsstreben 112 umfasst.

Der gegenseitige Abstand D der radial innenliegenden Enden zweier einander diametrial gegenüberliegender Verstärkungsstreben 112 definiert die lichte Weite des Filterkerzeninnenraums 110.

Der Stützkörper 108, einschließlich der Verstärkungsstreben 112, kann beispielsweise aus Edelstahl gebildet sein.

Die Außenseite des Stützkörpers 108 ist von einem zylindrischen Filtermedium 114 umgeben, welches beispielsweise als Siebgewebe oder Spaltsieb ausgebildet sein kann und sich an der Außenseite des Stützkörpers 108 abstützt.

Das Filtermedium 114 kann insbesondere aus einem Edelstahlgewebe oder aus einem Kunststoffgewebe gebildet sein.

Wenn das Filtermedium 114 als ein Siebgewebe ausgebildet ist, so beträgt die mittlere Maschenweite des Siebgewebes vorzugsweise von ungefähr 20 µm bis ungefähr 100 µm.

Wenn das Filtermedium 114 als Spaltsieb ausgebildet ist, so beträgt die mittlere Spaltbreite vorzugsweise von ungefähr 20 µm bis ungefähr 100 µm.

Das untere Ende des Stützkörpers 108 und des Filtermediums 114 ist mittels einer Verschlusskappe 116 verschlossen.

Am oberen, offenen Ende der Filterkerze 104 ist eine Rückspülstromstaukörperaufnahme 118 angeordnet, welche während einer Filtrationsphase der Filterkerze 104 einen beispielsweise kugelförmigen Rückspülstromstaukörper 120 aufnimmt, wie in den Fig. 1 und 2 dargestellt.

Die Rückspülstromstaukörperaufnahme 118 umfasst ein koaxial zum Stützkörper 108 ausgebildetes und angeordnetes Gehäuse 122, von dessen Innenseite 124 mehrere, beispielsweise vier, Verstrebungen 126, welche sich parallel zur Längsmittelachse 106 der Filterkerze 104 erstrecken und in der Umfangsrichtung der Filterkerze 104 im wesentlichen äquidistant voneinander beabstandet sind, in radialer Richtung in den Innenraum der Rückspülstromstaukörperaufnahme 118 vorstehen, um zwischen ihren radial innenliegenden Enden den Rückspülstromstaukörper 120 zu zentrieren.

Zwischen jeweils zwei in der Umfangsrichtung der Filterkerze 104 aufeinanderfolgenden Verstrebungen 126 ist jeweils ein Fluidkanal 128 ausgebildet, durch welchen filtriertes Fluid in der Filtrationsphase an dem Rückspülstromstaukörper 120 vorbeiströmen kann.

Das obere Ende des Gehäuses 122 der Rückspülstromstaukörperaufnahme 118 ist an der Halterung 102 der Filterkerze 104 festgelegt und weist eine Austrittsöffnung 129 auf, durch welche filtriertes Fluid aus dem Filterkerzeninnenraum 110 in einen Filtratraum 130 gelangen kann.

Der Rückspülstromstaukörper 120 weist eine geringere mittlere Dichte auf als das filtrierte Fluid, so dass die auf den Rückspülstromstaukörper 120 wirkende Auftriebskraft größer ist als die auf den Rückspülstromstaukörper 120 wirkende Gewichtskraft, weshalb der Rückspülstromstaukörper 120 sich in der in den Fig. 1 und 2 dargestellten Filtrationsphase der Filterkerze 104 in der am oberen Ende der Filterkerze 104 angeordneten Rückspülstromstaukörperaufnahme 118 befindet.

Ein Hindurchtreten des Rückspülstromstaukörpers 120 durch die Austrittsöffnung 129 der Filterkerze 104 wird durch einen Anschlag 132 verhindert, welcher sich quer durch den oberen Bereich der Rückspülstromstaukörperaufnahme 118 erstreckt und an dessen unterem Ende der Rückspülstromstaukörper 120 während der Filtrationsphase anstößt.

Der Rückspülstromstaukörper 120 kann beispielsweise als ein Hohlkörper, insbesondere eine Hohlkugel, aus einem Kunststoffmaterial oder aus einem metallischen Material, insbesondere aus einem Edelstahl, ausgebildet sein.

Alternativ hierzu kann der Rückspülstromstaukörper 120 auch massiv aus einem Material ausgebildet sein, welches eine geringere Dichte aufweist als das filtrierte Fluid.

Der Rückspülstromstaukörper 120 weist eine glatte Oberfläche auf, die mit keinerlei Borsten, Bürsten, flexiblen Lippen, flexiblen Kratzern oder anderen Vorsprüngen versehen ist.

Das vorstehend beschriebene Rückspülfilter 100 funktioniert wie folgt:
Während der in den Fig. 1 und 2 dargestellten Filtrationsphase strömt das zu filtrierende Fluid, beispielsweise eine zu filtrierende Flüssigkeit, die feste Verunreinigungen mit sich führt, aus einem die Filterkerze 104 umgebenden Schmutzraum 133 durch das Filtermedium 114 und Durchlassöffnungen zwischen den Verstärkungsstreben 112 des Stützkörpers 108 in den Filterkerzeninnenraum 110 ein, wobei die abzufiltrierenden Verunreinigungen an der Außenseite des Filtermediums 114 und/oder innerhalb des Filtermediums 114 abgelagert werden.

Die Strömungsrichtung des Fluids während der Filtrationsphase ist in Fig. 1 durch die Pfeile 134 angegeben.

Aus dem Filterkerzeninnenraum 110 gelangt das filtrierte Fluid durch die Fluidkanäle 128 der Rückspülstromstaukörperaufnahme 118 an dem Rückspülstromstaukörper 120 vorbei und durch die Austrittsöffnung 129 in den Filtratraum 130.

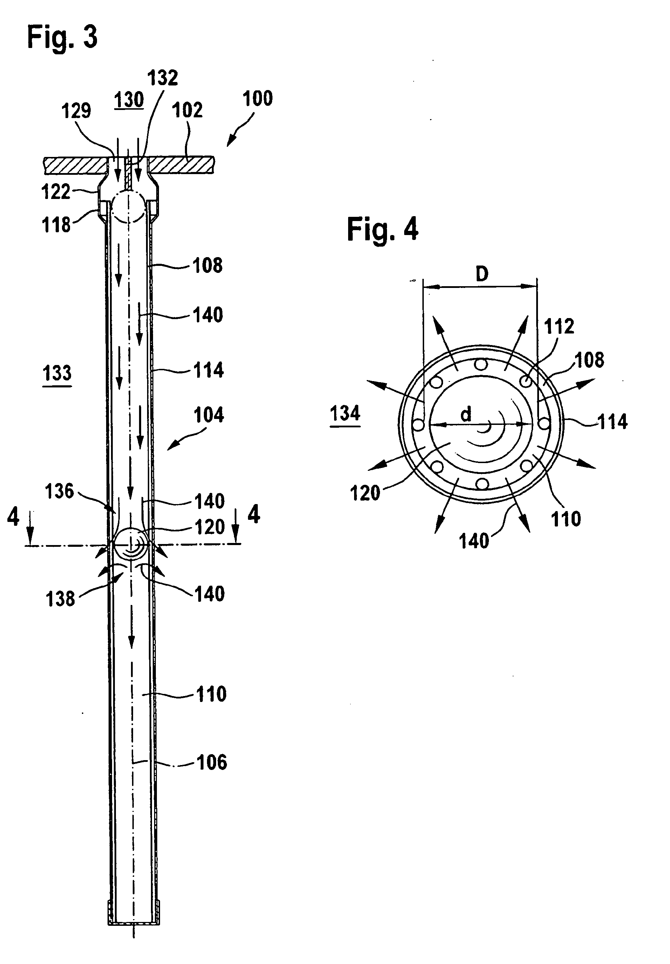

Bei Erreichen eines bestimmten Verschmutzungsgrades des Filtermediums 114 oder aber nach Ablauf einer vorgegebenen Filtrationszeit wird das Rückspülfilter 100 aus der Filtrationsphase in die in den Fig. 3 und 4 dargestellte Rückspülphase umgeschaltet, in welcher mittels eines (nicht dargestellten) Rückspülmechanismus filtriertes Fluid aus dem Filtratraum 130 in den Filterkerzeninnenraum 110 unter einem erhöhten Rückspüldruck von beispielsweise ungefähr 3 bar bis ungefähr 5 bar rückgespült wird, um, nach Durchtritt des Rückspülstroms durch den Stützkörper 108 und das Filtermedium 114, die an oder in dem Filtermedium 114 abgelagerten Verunreinigungen von dem Filtermedium 114 abzulösen.

Dieser fluidische Rückspüleffekt wird durch den im Filterkerzeninnenraum 110 angeordneten Rückspülstromstaukörper 120 deutlich verstärkt.

Der Rückspülstromstaukörper 120, dessen Oberseite mit dem erhöhten Rückspüldruck des Rückspülstroms beaufschlagt wird, wird durch den Rückspüldruck längs der Längsmittelachse 106 der Filterkerze 104 nach unten bewegt, wie in Fig. 3 dargestellt.

Dabei berührt der Rückspülstromstaukörper 120 die innere Begrenzungswand des Stützkörpers 108 und die Verstärkungsstreben 112 des Stützkörpers 108 nicht oder jeweils nur kurzzeitig, da der Durchmesser d des Rückspülstromstaukörpers 120 kleiner ist als die lichte Weite D des Filterkerzeninnenraums 110, so dass zwischen der Oberfläche des Rückspülstromstaukörpers 120 und den radial innenliegenden Enden der Verstärkungsstreben 112 ein Spalt von bis zu ungefähr 3 mm entsteht, bei einem Rückspülstromstaukörperdurchmesser d von beispielsweise ungefähr 20 mm.

Durch den zwischen dem Rückspülstromstaukörper 120 und dem Stützkörper 108 verbleibenden Spalt wird der Rückspülstromstaukörper 120 im wesentlichen reibungsfrei durch den Filterkerzeninnenraum 110 nach unten gedrückt.

Da der zwischen dem Rückspülstromstaukörper 120 und dem Stützkörper 108 verbleibende Spalt jedoch vergleichsweise klein ist, ergibt sich in dem in der Strömungsrichtung des Rückspülstroms unmittelbar vor dem Rückspülstromstaukörper 120 liegenden Bereich des Filterkerzeninnenraums 110 ein erhöhter Staudruck in dem Rückspülstrom.

Zugleich ergibt sich in dem in der Strömungsrichtung des Rückspülstroms unmittelbar hinter dem Rückspülstromstaukörper 120 liegenden Bereich 138 des Filterkerzeninnenraums 110 aufgrund der Trägheit des von dem Rückspülstromstaukörper 120 zu verdrängenden Fluids ebenfalls ein erhöhter Staudruck.

Aufgrund der Staudruckerhöhung in den Bereichen 136 und 138 in der unmittelbaren Nachbarschaft des Rückspülstromstaukörpers 120 wird das Filtermedium 114 in dem unmittelbar an die jeweilige Position des Rückspülstromstaukörpers 120 angrenzenden Bereich besonders intensiv von dem Rückspülstrom durchströmt, so dass jeweils in dem Bereich, in dem sich der Rückspülstromstaukörper 120 befindet, die Verunreinigungen besonders wirksam von dem Filtermedium 114 abgereinigt werden.

Die Strömungsrichtung des Rückspülstroms ist in den Fig. 3 und 4 durch die Pfeile 140 angegeben.

Da die Rückspülphase so lange durchgeführt wird, bis der Rückspülstromstaukörper 120 sich aus der Rückspülstromstaukörperaufnahme 118 bis zum unteren Ende der Filterkerze 104 bewegt hat, überstreicht der durch die Anwesenheit des Rückspülstromstaukörpers 120 erzeugte Bereich intensiver Spülung die gesamte Fläche des Filtermediums 114, so dass die gesamte Fläche des Filtermediums 114 besonders intensiv durchspült und abgereinigt wird.

Aufgrund dieser intensiven Durchspülung des Filtermediums 114 während der Rückspülphase weist die Filterkerze 104 eine besonders lange Standzeit auf.

Ferner wird dadurch, dass sich der Rückspülstromstaukörper 120 im wesentlichen mit konstanter Geschwindigkeit durch den Filterkerzeninnenraum 110 nach unten bewegt, die gesamte Fläche des Filtermediums 114 sehr gleichmäßig durchspült und abgereinigt, so dass es keine Bereiche des Filtermediums 114 gibt, welche nur unzureichend abgereinigt werden und dadurch die Standzeit der Filterkerze 104 als Ganzes verkürzen.

Der Rückspülstromstaukörper 120 kommt während des Rückspülens nicht in Kontakt mit dem Filtermedium 114, so dass die Abreinigung des Filtermediums 114 in der Rückspülphase allein durch den verstärkten fluidischen Rückspüleffekt und nicht durch mechanische Abreinigung mit dem Rückspülstromstaukörper erfolgt.

Nach Beendigung des Rückspülens während der Rückspülphase steigt der Rückspülstromstaukörper 120 vom unteren Ende des Filterkerzeninnenraums 110 wieder selbsttätig nach oben in die Rückspülstromstaukörperaufnahme 118 , da die auf den Rückspülstromstaukörper 120 wirkende Auftriebskraft die auf den Rückspülstromstaukörper 120 wirkende Gewichtskraft überwiegt.

Der Betrieb des Rückspülfilters 100 wird anschließend mit einer weiteren Filtrationsphase fortgesetzt.

## Patentansprüche

1. Filterkerze für ein Rückspülfilter (100) zum Filtrieren eines Fluids, umfassend einen von einem Filtermedium (114) umgebenen Filterkerzeninnenraum (110) und einen in dem Filterkerzeninnenraum (110) angeordneten Rückspülstromstaukörper (120), der beim Rückspülen der Filterkerze (104) durch den Rückspülstrom in einer Längsrichtung (106) der Filterkerze (104) bewegbar ist und eine lokale Erhöhung des Staudrucks des Rückspülstroms erzeugt,
**dadurch gekennzeichnet,**
**dass** der Rückspülstromstaukörper (120) beim Rückspülen der Filterkerze (104) nicht an dem Filtermedium (114) anliegt und
**dass** die Filterkerze (104) eine Rückspülstromstaukörperaufnahme (118) für den Rückspülstromstaukörper (120) aufweist, in welcher der Rückspülstromstaukörper (120) während der Filtrationsphase der Filterkerze (104) aufgenommen ist, wobei die Rückspülstromstaukörperaufnahme (118) mindestens einen Fluidkanal (128) zum Vorbeileiten des filtrierten Fluids an dem Rückspülstromstaukörper (120) und mindestens einen in den Innenraum der Rückspülstromstaukörperaufnahme (118) hinein weisenden Vorsprung (126) aufweist.

2. Filterkerze nach Anspruch 1, **dadurch gekennzeichnet, dass** die Ausdehnung des Rückspülstromstaukörpers (120) quer zu der Längsrichtung (106) der Filterkerze (104) kleiner ist als die lichte Weite (D) des Filterkerzeninnenraums (110) quer zu der Längsrichtung (106) der Filterkerze (104).

3. Filterkerze nach einem der Ansprüche 1 oder 2, **dadurch gekennzeichnet, dass** die Ausdehnung des Rückspülstromstaukörpers (120) quer zu der Längsrichtung (106) der Filterkerze (104) mindestens ungefähr 80 %, vorzugsweise mindestens ungefähr 90 %, der lichten Weite (D) des Filterkerzeninnenraums (110) beträgt.

4. Filterkerze nach einem der Ansprüche 1 bis 3, **dadurch gekennzeichnet, dass** die Breite eines Spaltes zwischen dem Rückspülstromstaukörper (120) einerseits und einer Begrenzungswand des Filterkerzeninnenraums (110) andererseits höchstens ungefähr 3 mm, vorzugsweise höchstens ungefähr 2 mm, beträgt.

5. Filterkerze nach einem der Ansprüche 1 bis 4, **dadurch gekennzeichnet, dass** der Rückspülstromstaukörper (120) im Wesentlichen kugelförmig ausgebildet ist.

6. Filterkerze nach einem der Ansprüche 1 bis 4, **dadurch gekennzeichnet, dass** der Rückspülstromstaukörper (120) im Wesentlichen zylindrisch ausgebildet ist.

7. Filterkerze nach einem der Ansprüche 1 bis 6, **dadurch gekennzeichnet, dass** der Rückspülstromstaukörper (120) eine vorsprungfreie Oberfläche aufweist.

8. Filterkerze nach einem der Ansprüche 1 bis 7, **dadurch gekennzeichnet, dass** der Rückspülstromstaukörper (120) beim Rückspülen der Filterkerze (104) nicht an einer Begrenzungswand des Filterkerzeninnenraums (110) anliegt.

9. Filterkerze nach einem der Ansprüche 1 bis 8, **dadurch gekennzeichnet, dass** der Rückspülstromstaukörper (120) eine kleinere mittlere Dichte aufweist als das filtrierte Fluid.

10. Filterkerze nach einem der Ansprüche 1 bis 9, **dadurch gekennzeichnet, dass** der Rückspülstromstaukörper (120) als ein Hohlkörper ausgebildet ist.

11. Filterkerze nach einem der Ansprüche 1 bis 10, **dadurch gekennzeichnet, dass** der Rückspülstromstaukörper (120) ein Material umfasst, das eine geringere Dichte aufweist als das filtrierte Fluid.

12. Filterkerze nach einem der Ansprüche 1 bis 11, **dadurch gekennzeichnet, dass** die Filterkerze (104) im Wesentlichen zylindrisch ausgebildet ist.

13. Filterkerze nach einem der Ansprüche 1 bis 12, **dadurch gekennzeichnet, dass** die Filterkerze (104) einen Anschlag (132) für den Rückspülstromstaukörper (120) aufweist, an welchem der Rückspülstromstaukörper (120) während der Filtrationsphase der Filterkerze (104) anliegt.

14. Filterkerze nach einem der Ansprüche 1 bis 13, **dadurch gekennzeichnet, dass** die Filterkerze (104) einen Stützkörper (108) umfasst, welcher das Filtermedium (114) abstützt.

15. Filterkerze nach Anspruch 14, **dadurch gekennzeichnet, dass** das Filtermedium (114) an der dem Filterkerzeninnenraum (110) abgewandten Außenseite des Stützkörpers (108) angeordnet ist.

16. Filterkerze nach einem der Ansprüche 1 bis 15, **dadurch gekennzeichnet, dass** die Filterkerze (104) in der Filtrationsphase von außen nach innen durchströmbar ist.

## Claims

1. A filter cartridge for a reversible flow filter (100) for filtering a fluid, comprising a filter cartridge interior (110) which is surrounded by a filtering medium (114), and a reverse flow damming body (120) which is arranged in the interior (110) of the filter cartridge and is moveable in a longitudinal direction (106) of the filter cartridge (104) by the reverse flow when back flushing the filter cartridge (104) and produces a local increase in the dynamic pressure of the reverse flow,
charaterised in that
the reverse flow damming body (120) does not abut against the filtering medium (114) when back flushing the filter cartridge (104), and in that the filter cartridge (104) has a reverse flow damming body seating (118) for the reverse flow damming body (120), in which seating the reverse flow damming body (120) is accommodated during the filtration phase of the filter cartridge (104), wherein the reverse flow damming body seating (118) has at least one fluid channel (128) for directing the filtered fluid past the reverse flow damming body (120), and at least one projection (126) pointing into the interior of the reverse flow damming body seating (118).

2. A filter cartridge in accordance with Claim 1, **characterized in that** the extent of the reverse flow damming body (120) transverse to the longitudinal direction (106) of the filter cartridge (104) is smaller than the inner width (D) of the interior (110) of the filter cartridge transverse to the longitudinal direction (106) of the filter cartridge (104).

3. A filter cartridge in accordance with either of the Claims 1 or 2, **characterized in that** the extent of the reverse flow damming body (120) transverse to the longitudinal direction (106) of the filter cartridge (104) amounts to at least approximately 80 %, and preferably to at least approximately 90 % of the inner width (D) of the interior (110) of the filter cartridge.

4. A filter cartridge in accordance with any of the Claims 1 to 3, **characterized in that** the width of a gap between the reverse flow damming body (120) on the one hand and a bounding wall of the interior (110) of the filter cartridge on the other amounts to at most approximately 3 mm, preferably to at most approximately 2 mm.

5. A filter cartridge in accordance with any of the Claims 1 to 4, **characterized in that** the reverse flow damming body (120) is substantially spherical.

6. A filter cartridge in accordance with any of the Claims 1 to 4, **characterized in that** the reverse flow damming body (120) is substantially cylindrical.

7. A filter cartridge in accordance with any of the Claims 1 to 6, **characterized in that** the reverse flow damming body (120) has a projection-free surface.

8. A filter cartridge in accordance with any of the Claims 1 to 7, **characterized in that** the reverse flow damming body (120) does not abut against a bounding wall of the interior (110) of the filter cartridge when back flushing the filter cartridge (104).

9. A filter cartridge in accordance with any of the Claims 1 to 8, **characterized in that** the reverse flow damming body (120) has a lower average density than the filtered fluid.

10. A filter cartridge in accordance with any of the Claims 1 to 9, **characterized in that** the reverse flow damming body (120) is in the form of a hollow body.

11. A filter cartridge in accordance with any of the Claims 1 to 10, **characterized in that** the reverse flow damming body (120) comprises a material which has a lower density than the filtered fluid.

12. A filter cartridge in accordance with any of the Claims 1 to 11, **characterized in that** the filter cartridge (104) is substantially cylindrical.

13. A filter cartridge in accordance with any of the Claims 1 to 12, **characterized in that** the filter cartridge (104) comprises a stop means (132) for the reverse flow damming body (120) against which the reverse flow damming body (120) abuts during the filtration phase of the filter cartridge (104).

14. A filter cartridge in accordance with any of the Claims 1 to 13, **characterized in that** the filter cartridge (104) comprises a supporting body (108) which supports the filtering medium (114).

15. A filter cartridge in accordance with Claim 14, **characterized in that** the filtering medium (114) is arranged on the outer surface of the supporting body (108) remote from the interior (110) of the filter cartridge.

16. A filter cartridge in accordance with any of the Claims 1 to 15, **characterized in that** the filter cartridge (104) is flowed through from the exterior to the interior in the filtration phase.

## Revendications

1. Bougie filtrante pour un filtre à lavage à contre-courant (100) destiné à filtrer un fluide, comprenant un compartiment intérieur de bougie filtrante (110) entouré par un milieu de filtre (114) et un corps de retenue du flux de contre-courant (120) disposé dans le compartiment intérieur de bougie filtrante (110), lequel est déplaçable par le flux de contre-courant dans une direction longitudinale (106) de la bougie filtrante (104) lors du lavage à contre-courant de la bougie filtrante (104) et provoque une élévation locale de la pression de retenue du flux de contre-courant,
**caractérisée en ce que**
le corps de retenue du flux de contre-courant (120) n'est pas en contact avec le milieu de filtre (114) lors du lavage à contre-courant de la bougie filtrante (104), et la bougie filtrante (104) comporte un logement de corps de retenue du flux de contre-courant (118) pour le corps de retenue du flux de contre-courant (120) où est logé ledit corps de retenue du flux de contre-courant (120) pendant la phase de filtration de la bougie filtrante (104), le logement du corps de retenue du flux de contre-courant (118) comportant au moins un canal de fluide (128) pour le passage du fluide filtré à côté du corps de retenue du flux de contre-courant (120), et au moins une saillie (126) s'étendant vers l'intérieur du logement de corps de retenue du flux de contre-courant (118).

2. Bougie filtrante selon la revendication 1, **caractérisée en ce que** l'extension du corps de retenue du flux de contre-courant (120) transversalement à la direction longitudinale (106) de la bougie filtrante (104) est inférieure au diamètre intérieur (D) du compartiment intérieur de bougie filtrante (110) transversalement à la direction longitudinale (106) de la bougie filtrante (104).

3. Bougie filtrante selon la revendication 1 ou 2, **caractérisée en ce que** l'extension du corps de retenue du flux de contre-courant (120) transversalement à la direction longitudinale (106) de la bougie filtrante (104) représente au moins 80 % environ, préférentiellement au moins 90 % environ du diamètre intérieur (D) du compartiment intérieur de bougie filtrante (110).

4. Bougie filtrante selon l'une des revendications 1 à 3, **caractérisée en ce que** la largeur d'un interstice entre le corps de retenue du flux de contre-courant (120) d'une part, et une paroi de délimitation du compartiment intérieur de bougie filtrante (110) d'autre part, représente au plus -3 mm environ, préférentiellement au plus 2 mm environ.

5. Bougie filtrante selon l'une des revendications 1 à 4, **caractérisée en ce que** le corps de retenue du flux de contre-courant (120) est réalisé avec une forme sensiblement sphérique.

6. Bougie filtrante selon l'une des revendications 1 à 4, **caractérisée en ce que** le corps de retenue du flux de contre-courant (120) est réalisé avec une forme sensiblement cylindrique.

7. Bougie filtrante selon l'une des revendications 1 à 6, **caractérisée en ce que** le corps de retenue du flux de contre-courant (120) présente une surface exempte de saillies.

8. Bougie filtrante selon l'une des revendications 1 à 7, **caractérisée en ce que** le corps de retenue du flux de contre-courant (120) n'est pas en contact avec une paroi de délimitation du compartiment intérieur de bougie filtrante (110) lors du lavage à contre-courant de la bougie filtrante (104).

9. Bougie filtrante selon l'une des revendications 1 à 8, **caractérisée en ce que** le corps de retenue du flux de contre-courant (120) présente une densité moyenne inférieure à celle du fluide filtré.

10. Bougie filtrante selon l'une des revendications 1 à 9, **caractérisée en ce que** le corps de retenue du flux de contre-courant (120) est réalisé comme corps creux.

11. Bougie filtrante selon l'une des revendications 1 à 10, **caractérisée en ce que** le corps de retenue du flux de contre-courant (120) est constitué d'un matériau de densité inférieure à celle du fluide filtré.

12. Bougie filtrante selon l'une des revendications 1 à 11, **caractérisée en ce que** ladite bougie filtrante (104) est réalisée avec une forme sensiblement cylindrique.

13. Bougie filtrante selon l'une des revendications 1 à 12, **caractérisée en ce que** ladite bougie filtrante (104) comporte une butée (132) pour le corps de retenue du flux de contre-courant (120), au contact de laquelle entre le corps de retenue du flux de contre-courant (120) pendant la phase de filtration de la bougie filtrante (104).

14. Bougie filtrante selon l'une des revendications 1 à 13, **caractérisée en ce que** ladite bougie filtrante (104) comprend un corps d'appui (108) supportant le milieu de filtre (114).

15. Bougie filtrante selon la revendication 14, **caractérisée en ce que** le milieu de filtre (114) est disposé contre la face extérieure du corps d'appui (108) opposée au compartiment intérieur de bougie filtrante (110).

16. Bougie filtrante selon l'une des revendications 1 à 15, **caractérisée en ce que** le flux peut s'écouler de l'extérieur vers l'intérieur de ladite bougie filtrante (104) pendant la phase de filtration.
